Europäisches Patentamt

European Patent Office

Office européen des brevets

(19)

(11) EP 0 793 292 A1

(12) EUROPEAN PATENT APPLICATION

(43) Date of publication:
03.09.1997 Bulletin 1997/36

(51) Int Cl.6: H01Q 3/26, H04B 3/04

(21) Application number: 97301244.6

(22) Date of filing: 25.02.1997

(84) Designated Contracting States:
DE FI FR NL SE

(30) Priority: 28.02.1996 GB 9604380

(71) Applicant: NORTHERN TELECOM LIMITED
Montreal, Quebec H2Y 3Y4 (CA)

(72) Inventor: Waylett, Nicholas Stanley Arthur
Paignton, Devon TQ3 2LT (GB)

(74) Representative: Ryan, John Peter William et al
Nortel Patents,
London Road
Harlow, Essex CM17 9NA (GB)

Remarks:
•The reference to the drawing 3 is deemed to be deleted (Rule 43 EPC).
•A request for correction of claim 7 has been filed pursuant to Rule 88 EPC. A decision on the request will be taken during the proceedings before the Examining Division (Guidelines for Examination in the EPO, A-V, 3.).

(54) An antenna receive calibration arrangement

(57) For a specific antenna installation the variables of temperature, frequency and length affect the performance of the installation. Most of these variables can be taken into account by specific circuitry, but batch to batch variations at the antenna cannot be taken into account, since these variables tend to be outside the dynamic range of the base station. These have to be monitored on an individual basis, and are taken into account on installation. In accordance with the present invention, there is provided a base station arrangement 10 comprising an antenna 12 with adjacently located amplifiers 18, wherein the noise of an amplifier on one channel can be monitored as a signal source and compared with a reference value, whereby signal loss associated with the arrangement can be compensated. A method of calibrating the receive electronics of a base station arrangement, wherein the arrangement comprises an antenna with an adjacently located receive amplifier and remotely located electronic control means is also disclosed.

Fig. 1

## Description

This invention relates to a base station arrangement, for use in a radio communications system and, in particular, relates to an antenna receiver and a calibration arrangement therefor.

Radio systems are in use throughout the world transmitting telecommunications signals to radio receivers In order to meet the capacity demand, within the available frequency band allocation, radio operators divide a geographic area to be covered into cells. At the centre of each cell is a transmitter or base station, which broadcasts a signal. The available operating frequencies are divided between the cells such that the same group of operating frequencies are not reused by adjacent cells, in order that co-channel interference is maintained at a tolerable level.

When a new radio system is initially deployed, operators are often interested in maximising the downlink range (base station broadcast range). Any increase in range means that fewer cells are required to cover a given geographic area, hence reducing the number of base stations and associated infrastructure costs. The antenna used at the radio base station site can potentially make significant improvements to the range and capacity of a radio system. Associated with this requirement is the need to ensure that received signals are processed with the least amount of distortion and loss. At the masthead, signals from the antenna pass through a filter and a diplexer and then through cabling to receive electronics, where the signal is amplified. Some antennas have associated receive amplifiers which boost the signal prior to further signal degadation on passing through the cabling as the signals are transmitted to a base station electronics unit. At this point the received signal is ideally above a particular level.

In the cases where receive amplifiers are situated adjacent to the antennas, the amount of gain needs to be accurately determined. The receive signal strength is normally measured by measurement at the time of installation in order to guarantee a receive level as the signal comes part way through the base station arrangement. There is a gain variation $\Delta G$ at the low noise amplifier and there is a loss $\Delta L$ through the diplexer. Further losses arise due to the cabling, with variations in temperature and also variations which occur from one batch to another in respect of equipment employed. Losses due to frequency variation, are, however, negligible, in relation to variation in cable length, which can be a large variable. The length variable arises from the position of an antenna on a mast which can typically be 10 metres to 100 metres in height. Base station control electronics are normally situated at the bottom of the mast since that is nomally convenient, but it may be 20 metres away, for instance, by a convenient power source or for protection against vandals. These variables amount to some 20dB or so. Such losses need not be considered in relation to the transmit path since there is typically a feedback link which keeps the output constant with power detectors, couplings at the antenna and they then feed back a signal digitally down to the base station.

For a specific installation the variables of temperature, frequency and length can be taken into account by specific circuitry, but batch to batch variations at the antenna cannot be taken into account, since these variables are outside the dynamic range of the base station. These have to be monitored on an individual basis, and are taken into account on installation. In practice a variable gain block is provided which allows the receive signal to be adjusted to a certain level which is consistent with the amount of loss associated with the system. In some systems a noise source is placed up the masthead and the system is characterised with reference to this source. Furthermore, any method using/incorporating a reference level at the masthead is susceptible to further problems arising from extra equipment which consumes electricity, generates heat and will also reduce the reliability potential since it exists as an extra component. The signal source needs to be very stable (to within 1°/1dB of accuracy) over a wide temperature range (minus 40° to plus 80°C), tends to be expensive and is typically only used once.

It is an object of the invention to seek to provide a less expensive and more accurate apparatus for, and method of, performing calibration of an antenna installation.

In accordance with the present invention, there is provided a base station arrangement comprising an antenna with adjacently located amplifiers, wherein the noise of an amplifier on one channel can be monitored as a signal source and compared with a reference value, whereby signal loss associated with the arrangement can be compensated. The channel may, for instance, be a dedicated signal channel frequency or a particular time slot in a TDM channel

Preferably the amplifier is a low noise amplifier. Amplifiers generate noise whether amplifying or operating in a standby mode; i.e. the level of noise present is always above zero. Since noise level is always present such noise can be monitored on a spare channel in the base station controller. At the time of calibration a spare channel must be made available so that there is no interference.

In accordance with another aspect of the invention, there is provided a method of calibrating the receive electronics of a base station arrangement, wherein the arrangement comprises an antenna with an adjacently located receive amplifier and remotely located electronic control means; the method comprising the steps of:

i) generating a signal and feeding said signal to the receive amplifier ;
ii) generating noise in the amplifier operating on said signal;
iii) transmitting the noise to the electronic control means;

iv) determining at the electronic control means the amount of noise after transmission from the low noise amplifier;

v) comparing the noise level with a reference level, and;

vi) adjusting the receive gain to compensate for signal loss due to the installation.

Embodiments of the invention will now be described with reference to the accompanying drawings, in which:

Fig. 1 is a block diagram of the main elements of the masthead,

Fig. 2 is a detailed diagram of a masthead configuration.

Fig. 3 is a block diagram of the main elements of an embodiment according to the invention.

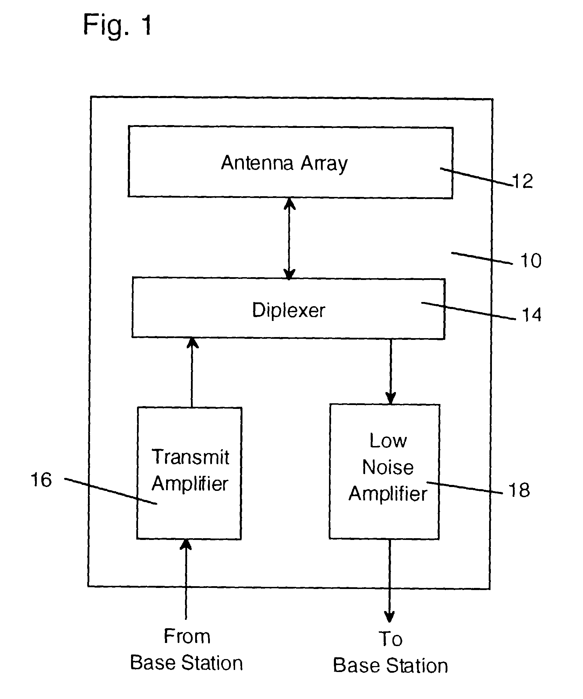

The main elements of a preferred antenna arrangement, as shown in Fig. 1, comprise a mast, tower or building 10 supporting an antenna array 12 and associated antenna electronics, which includes a diplexer 14, transmit amplifiers 16 and low noise receive amplifiers 18. The amplifiers are connected via feeder cables to a base station electronic control means which links the cellular radio system with, for example, a public wired telecommunication service.

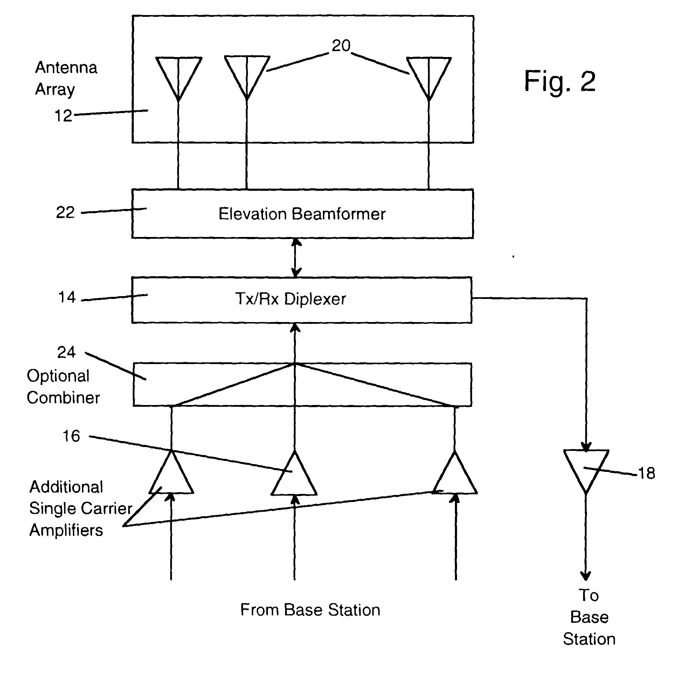

The detailed constituents of the antenna are shown in Fig. 2. The antenna array 12 comprises a conventional array of individual antenna elements 20 arranged in rows and columns. Each column of elements is energised via an elevation beamforming network 22. Each elevation beamforming network combines the elements of a column to a single feed point. The amplitude and phase relationships of the r.f. signals coupled to the elevation beamformer determine the elevation beam pattern of the antenna for both transmit and receive.

The transmit and receive signals for the antenna array are coupled to the elevation beamformer via a diplexer 14. Filters that cover just the transmit or receive frequency bands respectively can be used for this purpose. In the transmit path the diplexer 14 is fed from the transmit amplifier 16. The low noise amplifier is required to amplify the weak received r.f. signals prior to any system losses to establish a low noise figure (high sensitivity) in the subsequent receive path. Whilst the low noise amplifiers produce reduced noise levels, noise will still be present: this noise is employed as an indicator of the attenuation over the receive path from the antenna to the control electronics - a signal is generated and fed into the receive amplifier, the operation of the amplifier generating noise, which noise is sampled and transmitted through the receive path to the control electronics. Thus, the inherent noise figure generated by the amplifier, is employed in calibrating the receive gain to overcome system losses. The noise level is a characteristic of a particular configuration; when it is receiving no signal then the background noise of the amplifier is the thermal noise within the electronics.

The noise figure (NF) is determined as folows:

$$NF = {}^{OSN}\!/_{ISN}$$

Where:

OSN = output signal noise
ISN = input signal noise.

Since a noise level is always present, this noise level can be monitored on a spare channel (a channel which is not carrying a signal, which would affect the noise figure reading). However, this operation is carried out infrequently, for example upon installation or after repair, and the requirement for a spare channel is not a problem. It is to be assumed that, upon installation, there are no active channels: it is expedient, however to determine that this is indeed the case - interference could arise from sources other than radios operating within the vicinity. Moreover, the ease of testing the noise figure could be employed as a routine check to ensure that, should a system's performance reduce, then appropriate remedial action may take place prior to complete failure.

The principle of operation is as follows: a spare channel is selected, a signal is generated and fed to a receive amplifier - this signal simulates a 'normal' received signal, the noise figure generated by the receive amplifier is determined and the gain of the amplifier is adjusted to compensate for losses due to the installation. The channel referred to in this instance may, for example, be a signal channel frequency or a particular time slot in a TDM channel. In a TDM arrangement, each TDM channel may have its own amplifier. The noise figure is preferably measured by means of a spectrum analyser. The noise generated can be compared with known data, or an additional low noise amplifier could be connected to a second input of the spectrum analyser. The level of noise should be low in order that the noise determined is principally due to thermal noise. It is preferable that the amplifier has a very low noise level.

Referring now to figure 3, a noise figure meter 30 is selectively coupled via switching means 32a,b and a filter 33 of a noise reference switch unit 34 between a reference amplifier 35 and a signal received from the front end receive amplifier 36. The front end receive amplifier is input a signal by signal generating means 37 to simulate a receive signal and the noise signal generated is transmitted through cabling to a splitter 38 associated with the control means 39. The power loss attributable to the cabling up to the masthead can accordingly be determined and the loss due to the cabling can be compensated by appropriate adjustment of the gain of the receive amplifier. One advantage of the system is that the base station can, in the longer term, periodically scan around its available channels to find a spare one and it can then characterise the system and adjust the receive gain as appropriate. The noise figure meter could be replaced with a spectrum analyser; the reference amplifier could replaced with reference data. The base transceiver station, BTS, could have a feedback loop to control the operation.

It is to be noted that signals will also be picked-up from external noise sources which can make measurement difficult, but such noise sources are typically monochromatic i.e. there would be lines appearing at particular frequencies so that these signals could be taken into account and the noise level can be determined. Typically spectrum analysers have an automatic digital signal processing facilities function whereby an average over a band of frequencies is obtained for the noise level.

## Claims

1. A base station arrangement 10 comprising an antenna 12 with adjacently located amplifiers 18, wherein the noise of an amplifier on one channel is capable of being monitored as a signal source and compared with a reference value, whereby to compensate for signal loss associated with the arrangement.

2. An arrangement according to claim 1 wherein the amplifier is a low noise amplifier.

3. An arrangement according to claim 1 or 2 wherein the noise figure is measured by means of a spectrum analyser.

4. An arrangement according to any one of claims 1 to 3 wherein the noise generated is compared with reference data.

5. An arrangement according to any one of claims 1 to 3 wherein the noise generated is compared with the noise generated by an additional low noise amplifier which is connected to a second input of the spectrum analyser.

6. A method of calibrating the receive electronics of a base station arrangement 10, wherein the arrangement comprises an antenna 12 with an adjacently located receive amplifier 18 and remotely located electronic control means; the method comprising the steps of:

i) generating a signal and feeding said signal to the receive amplifier ;
ii) generating noise in the amplifier operating on said signal;
iii) transmitting the noise to the electronic control means;
iv) determining at the electronic control means the amount of noise after transmission from the low noise amplifier;
v) comparing the noise level with a reference level, and;
vi) adjusting the receive gain to compensate for signal loss due to the installation.

7. A method according to claim 8 wherein the reference level is generated by a further amplifier positioned local to the control means.

## Fig. 1

Fig. 2

European Patent
Office

**EUROPEAN SEARCH REPORT**

Application Number

EP 97 30 1244

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP 0 687 031 A (NORTHERN TELECOM LTD) 13 December 1995 * column 3, line 36 - column 6, line 39; figures 3,4 * | 1-7 | H01Q3/26 H04B3/04 |
| Y | PATENT ABSTRACTS OF JAPAN vol. 010, no. 221 (E-424), 2 August 1986 & JP 61 056525 A (NEC CORP), 22 March 1986, * abstract * | 1-7 | |
| Y | PATENT ABSTRACTS OF JAPAN vol. 011, no. 374 (E-562), 5 December 1987 & JP 62 141823 A (FUJITSU LTD), 25 June 1987, * abstract * | 1,6 | |
| A | EP 0 532 763 A (MITSUBISHI ELECTRIC CORP) 24 March 1993 * column 1, line 8 - column 2, line 19; figures 1,2 * | 1,6 | TECHNICAL FIELDS SEARCHED (Int.Cl.6) |
| A | WO 95 34103 A (ERICSSON TELEFON AB L M ;JOHANNISSON BJOERN GUNNAR (SE); FORSSEN U) 14 December 1995 * page 2, line 3 - page 2, line 23; figure 2 * | 1,6 | H01Q H04B H03F |

The present search report has been drawn up for all claims

| Place of search | Date of completion of the search | Examiner |
|---|---|---|
| MUNICH | 5 June 1997 | Cannard, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)